# EUROPEAN PATENT APPLICATION

(11) **EP 2 472 793 A1**
(43) Date of publication of application: **04.07.2012**
(21) Application number: 10845563.5
(22) Date of filing: 20.10.2010
(51) Int. Cl.: H04L 12/42

(54) **METHOD, DEVICE AND SYSTEM FOR TRANSMITTING E1 BIDIRECTIONAL LOOPED NETWORK DATA**

(30) Priority: 11.02.2010 CN 201010111539
(71) Applicant: Huawei Technologies Co., Ltd., Shenzhen, Guangdong 518129 (CN)
(72) Inventor: FENG, Ruiming, Shenzhen Guangdong 518129 (CN)
(74) Representative: Körber, Martin Hans
(86) International application number: PCT/CN2010/077903
(87) International publication number: WO 2011/097893

(57) **Abstract**

Embodiments of the present invention disclose a method, an apparatus, and a system for transmitting data in an E1 bidirectional ring network. The E1 node includes: an Ethernet transmitting unit connected to a local Ethernet device through an Ethernet branch port, a CPU unit, and an E1 driving unit including a first-direction link port and a second-direction link port; when the CPU unit determines, on the basis of an interaction state of link state detection signaling with a neighboring E1 node, that a transmission link between the E1 node and the neighboring E1 node fails, link failure information is transmitted to a master node through a link port in the first-direction link port and the second-direction link port of the E1 node, where the link port is not a link port that is associated with the failed transmission link and is currently unavailable, so that the master node switches an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data. The embodiments of the present invention can effectively improve the survivability of the E1 bidirectional ring network.

## Description

### FIELD OF THE INVENTION

The present invention relates to the field of communication network technologies, and in particular, to a method, an apparatus, and a system for transmitting data in an E1 bidirectional ring network.

### BACKGROUND OF THE INVENTION

The conventional E1 (E1 is a European digital transmission format designed by the ITU-TS and named by the CEPT (Conference of European Postal and Telecommunication Administration)) transmission includes star, chain, and ring networking modes. A star networking system is simple, but the utilization of transmission resources is low. The chain networking may realize sharing of transmission resources, but the survivability is poor. Currently, there are two kinds of ring networking systems. One (Application No. 200610020385.3 and Publication No. CN1812364) inherits the advantage of resource sharing of chain networking. In this networking system, a switch device having a Spanning Tree Protocol (STP, Spanning Tree Protocol) function is externally disposed at a master node, and the switch device enables the STP function to detect and control the state of the ring.

Another ring networking system (Application No. 200810217523.6 and Publication No. CN101404605A) also inherits the advantage of resource sharing of chain networking. In this networking system, an OAM (Operation, Administration, and Maintenance) station is disposed at the master node, and the OAM station sends ring detection signaling through the master node, and controls the network state.

However, during the research, the inventor discovers that the prior art has at least the following weaknesses:

In the first E1 bidirectional ring network, a switch device for detecting and controlling the ring state must be disposed externally, and in addition, defects of long response time and little information exist in using the STP function of the switch device to control the ring state, so that it is difficult to locate the point of failure, and the cost for subsequent use and maintenance is high.

In the second E1 bidirectional ring network, an OAM station must be disposed externally, and when there is no OAM station, the network has no capability of self-diagnosis and ring protection. When the scale of the network increases, the self-healing time of the network becomes longer.

Therefore, the survivability of the E1 bidirectional ring networks in the prior art is poor.

### SUMMARY OF THE INVENTION

Embodiments of the present invention provide a method, an apparatus, and a system for transmitting data in an E1 bidirectional ring network, which can effectively improve the survivability of the E1 bidirectional ring network.

An embodiment of the present invention provides an E1 node. The E1 node includes: an Ethernet transmitting unit connected to a local Ethernet device through an Ethernet branch port, a CPU unit, and an E1 driving unit that includes a first-direction link port and a second-direction link port; where the Ethernet transmitting unit and the E1 driving unit perform data interaction through the CPU unit; and
the CPU unit is configured to perform interaction of link state detection signaling between the E1 node and a corresponding neighboring E1 node through the first-direction link port and/or the second-direction link port of the E1 driving unit; and when determining a failure in a transmission link between the E1 node and the neighboring E1 node on the basis of an interaction state of the link state detection signaling between the E1 node and the neighboring E1 node, transmit link failure information to a master node through a link port in the first-direction link port and the second-direction link port of the E1 node, where the link port is not a link port that is associated with the failed transmission link and is currently unavailable, so that after receiving the link failure information, the master node switches an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data.

An embodiment of the present invention provides a system for transmitting data in an E1 bidirectional ring network. The system includes: a master node and at least one slave node, where each node is connected to a local Ethernet device through an Ethernet branch port; each slave node is configured to perform interaction of link state detection signaling with a corresponding neighboring node through a first-direction link port and/or a second-direction link port, and when determining a failure in a transmission link between the slave node and the corresponding neighboring E1 node on the basis of an interaction state of the link state detection signaling between the slave node and the neighboring E1 node, transmit link failure information to the master node through a link port in the first-direction link port and the second-direction link port of the slave node, where the link port is not a link port that is associated with the failed transmission link and is currently unavailable; and
the master node is configured to perform interaction of link state detection signaling with a corresponding neighboring node through a first-direction link port and/or a second-direction link port, and when determining a failure in a transmission link between the master node and the corresponding neighboring E1 node on the basis of an interaction state of the link state detection signaling between the master node and the corresponding neighboring E1 node or after receiving the link failure information, switch an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data.

An embodiment of the present invention also provides a method for transmitting data in an E1 bidirectional ring network. The method includes:
performing interaction of link state detection signaling between a current E1 node and a corresponding neighboring E1 node through a first-direction link port and/or a second-direction link port; and
when determining a failure in a transmission link between the current E1 node and the neighboring E1 node on the basis of an interaction state of the link state detection signaling between the current E1 node and the neighboring E1 node, transmitting link failure information to a master node through a link port in the first-direction link port and the second-direction link port of the current E1 node, where the link port is not a link port that is associated with the failed transmission link and is currently unavailable, so that after receiving the link failure information, the master node switches an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data.

As compared with the prior art, the technical solutions of the embodiments of the present invention have the following advantages:

According to the embodiments of the present invention, the state of the transmission link between neighboring E1 nodes can be learned by the signaling interaction between the neighboring E1 nodes, so that the E1 bidirectional ring network has the self-diagnosis capability, and the master node can learn the failed transmission link in time, so as to generate a new E1 transmission ring. Therefore, a device for detecting the state of a transmission link does not need to be disposed externally, the self-healing time of the E1 bidirectional ring network is short, and because a node automatically detects its own failure state and automatically restores the E1 bidirectional ring network when a failure occurs, the self-healing time of the E1 bidirectional ring network does not change with the increase of the network capacity, so that the survivability of the E1 bidirectional ring network can be improved effectively.

### BRIEF DESCRIPTION OF THE DRAWINGS

To make the technical solutions of the embodiments of the present invention clearer, the accompanying drawings used in the description of the embodiments or the prior art are briefly described hereunder. Evidently, the accompanying drawings to be described illustrate only some embodiments of the present invention, and persons of ordinary skill in the art can obtain other drawings on the basis of these drawings without creative efforts.

FIG 1 is a schematic structural diagram of an E1 node according to an embodiment of the present invention;

FIG 2 is a schematic structural diagram of another CPU unit according to an embodiment of the present invention;

FIG 3 is a schematic structural diagram of a system for transmitting data in an E1 bidirectional ring network according to an embodiment of the present invention;

FIG 4 is a diagram illustrating the principle of self-healing of the system for transmitting data in an E1 bidirectional ring network in FIG 3;

FIG 5 is a schematic flowchart of a method for transmitting data in an E1 bidirectional ring network according to an embodiment of the present invention;

FIG 6 is a schematic flowchart of another method for transmitting data in an E1 bidirectional ring network according to an embodiment of the present invention; and

FIG 7 is a schematic diagram illustrating interaction between neighboring nodes in an E1 bidirectional ring network according to an embodiment of the present invention.

### DETAILED DESCRIPTION OF THE EMBODIMENTS

The technical solutions of the embodiments of the present invention are hereinafter described clearly and completely with reference to the accompanying drawings in the embodiments of the present invention. It is evident that the described embodiments are only some embodiments of the present invention, rather than all embodiments of the present invention. All other embodiments obtained by persons of ordinary skill in the art without making creative efforts on the basis of the embodiments of the present invention shall fall within the protection scope of the present invention.

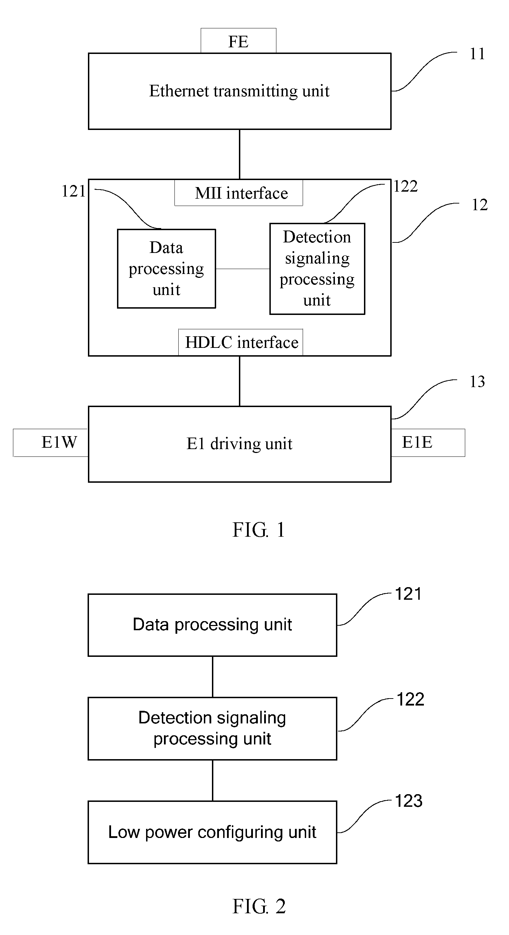

An embodiment of the present invention discloses an E1 node. As shown in FIG 1, FIG 1 is a schematic structural diagram of the E1 node, and the node includes: an Ethernet transmitting unit 11 connected to a local device through an Ethernet branch port (FE), a CPU (Central Processing Unit, central processing unit) unit 12, and an E1 driving unit 13 including a first-direction link port and a second-direction link port. The Ethernet transmitting unit 11 and the E1 driving unit 13 perform data interaction through the CPU unit 12.

The CPU unit is configured to perform interaction of link state detection signaling with a corresponding neighboring E1 node through the first-direction link port and/or the second-direction link port of the E1 driving unit; and when determining a failure in a transmission link between the E1 node and the neighboring E1 node on the basis of an interaction state of the link state detection signaling between the E1 node and the neighboring E1 node, transmit link failure information to a master node through a link port in the first-direction link port and the second-direction link port of the E1 node, where the link port is not a link port that is associated with the failed transmission link and is currently unavailable, so that after receiving the link failure information, the master node switches an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data.

In one implementation, data is transmitted counterclockwise in an E1 bidirectional ring network, and then the first-direction link port may specifically be a west E1 port (E1W) and the second-direction link port may specifically be an east E1 port (E1E).

In another implementation, data is transmitted clockwise in an E1 bidirectional ring network, and then the first-direction link port may specifically be an east E1 port (E1E) and the second-direction link port may specifically be a west E1 port (E1W).

This embodiment is described by taking an example that the first-direction link port is specifically an east E1 port (E1E) and the second-direction link port is specifically a west E1 port (E1W) for illustration. Two E1 link ports of the E1 driving unit 13 include the E1E port (east E1 port) and the E1W port (west E1 port) shown in FIG 1. In a preferred implementation solution of this embodiment of the present invention, the CPU unit 12 has both an MII (Media Independent Interface, media independence interface) interface and an HDLC (High-Level Data Link Control, high-level data link control) interface, and the CPU unit 12 is communicatively connected to the Ethernet transmitting unit 11 through the MII interface and is communicatively connected to the E1 driving unit 13 through the HDLC interface. Through the MII interface and the HDLC interface, bidirectional automatic conversion from the data of an E1 interface to the data of an Ethernet MII interface is implemented. In addition, the E1 node in this embodiment of the present invention can implement the mutual communication between an Ethernet interface and two E1 links to implement long-distance data communication. The CPU unit 12 may be used to forward the data from the E1E port to the E1W port or forward the data from the E1W port to the E1E port, so as to implement transparent transmission of data.

It should be noted that in this embodiment of the present invention, the CPU unit 12 includes a data processing unit 121 and a detection signaling processing unit 122.

The data processing unit 121 is configured to parse a data message that is received from the second-direction E1 link port and delivered by a previous hop neighboring E1 node; forward the data message to the Ethernet transmitting unit 11 which then transmits the data message to the local Ethernet device, when destination address information carried in the data message matches address information of the E1 node; and transmit the data message from the first-direction E1 link port to a next hop neighboring E1 node when destination address information carried in the data message does not match address information of the E1 node.

This embodiment is described by taking an example that the first-direction link port is specifically an east E1 (E1E) port and the second-direction link port is specifically a west E1 (E1W) port for illustration. When receiving data from the E1W port, the E1 driving unit 13 transmits the data to the data processing unit 121 of the CPU unit 12 for processing. The data processing unit 121 receives the data, and parses the data to obtain the destination address information carried in the data, where the destination address information is used for indicating a recipient address of the data. If the parsed destination address information matches the address information of the E1 node, the data is transmitted through the Ethernet transmitting unit 11 to a local device attached to the E1 node; and if the parsed destination address information does not match the address information of the E1 node, the data is directly transmitted to the E1E port of the E1 driving unit 13, and then is transmitted to a next hop E1 node, so as to complete the transparent transmission of data.

It should be noted that the address information under various protocols supported by the E1 node, such as IP (Internet Protocol, a protocol for interconnection between networks), may be used as the address information.

The detection signaling processing unit 122 is configured to transmit link state query signaling to a corresponding neighboring E1 node through the first-direction link port and/or the second-direction link port of the E1 driving unit 13 and receive link state response signaling transmitted by the neighboring E1 node, and receive link state query signaling transmitted by the neighboring E1 node and transmit link state response signaling to the corresponding neighboring E1 node through the first-direction link port and/or the second-direction link port of the E1 driving unit 13; and when no link state query signaling or link state response signaling transmitted by the neighboring E1 node is received within a preset time range, determine that the transmission link between the E1 node and the neighboring E1 node fails, and generate link failure information and transmit the link failure information to the master node through a link port in the first-direction link port and the second-direction link port of the E1 node, where the link port is not a link port that is associated with the failed transmission link and is currently unavailable. The link state detection signaling includes link state query signaling and link state response signaling.

It can be seen that, the E1 node can implement signaling interaction with a neighboring E1 node through the detection signaling processing unit 122. It should be noted that in this embodiment of the present invention, the transmission link between two neighboring E1 nodes includes two signaling transmission channels, where one of the two signaling transmission channels is used for one of the two neighboring E1 nodes to send or to feed back signaling to the other neighboring E1 node, and the other channel is used for the other neighboring E1 node to feed back or to send the signaling to the E1 node. The signaling interaction includes the following: The E1 node sends the link state query signaling to the neighboring E1 node and receives the link state response signaling fed back by the neighboring E1 node; and the neighboring E1 node sends the link state query signaling to the E1 node and the E1 node feeds back the link state response signaling to the neighboring E1 node. The E1 node occupies one signaling transmission channel when sending the link state query signaling and feeding back the link state response signaling to the neighboring E1 node, and the neighboring E1 node occupies another signaling transmission channel when sending the link state query signaling and feeding back the link state response signaling to the E1 node.

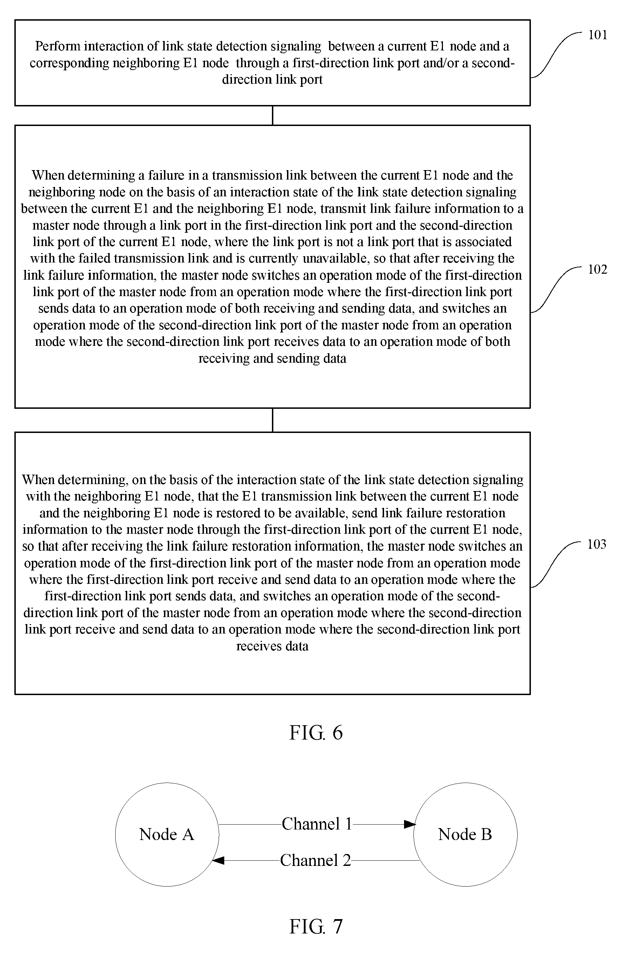

The signaling interaction process is briefly described hereinafter. For ease of description, only node A and node B are illustrated. During the signaling interaction between node A and node B, as shown in FIG 7, after node A sends the link state query signaling to node B, if node A does not receive, within a preset time range, the link state response signaling returned by node B, then in this case, node A cannot determine whether the sending channel 1 of node A or the receiving channel 2 of node A fails; while if node B can always receive the link state query signaling sent by node A but cannot receive the link state response signaling returned by the neighboring node A in response to the link state query signaling of node B, it may be determined that the sending channel 2 of node B fails while the receiving channel 1 of node B is normal. In this case, node B may transmit the link failure information to the master node.

Similarly, as shown in FIG. 7, after node B sends the link state query signaling to node A, if node B does not receive, within a preset time range, the link state response signaling returned by node A, then in this case, node B cannot determine whether the sending channel 2 of node B fails or the receiving channel 1 of node B fails; while if node A can always receive the link state query signaling sent by node B but cannot receive the link state response signaling returned by the neighboring node B in response to the link state query signaling of node A, then it may be determined that the sending channel 1 of node A fails while the receiving channel 2 of node A is normal. In this case, node A may transmit the link failure information to the master node. It can be seen that the E1 node in this embodiment of the present invention can learn the state of the transmission link between the E1 node and the neighboring E1 node in time, and when the transmission link fails, the E1 node can transmit the link failure information to the master node in time.

Therefore, an E1 bidirectional ring network applying the E1 node of this embodiment of the present invention has the self-diagnosis capability, and the master node can learn the failed transmission link in time, so as to generate a new E1 transmission ring. In this way, a device for detecting the state of a transmission link does not need to be disposed externally, and the survivability of the E1 bidirectional ring network can be improved effectively.

When persons skilled in the art specifically implement the E1 node in this embodiment of the present invention, the detection signaling processing unit 122 is further configured to: send link failure restoration information to the master node through the first-direction link port when detecting, by the interaction of link state query signaling and/or link state response signaling with the corresponding neighboring E1 node through the first-direction link port and/or the second-direction link port of the E1 driving unit, that the E1 transmission link between the E1 node and the neighboring E1 node is restored and available.

Specifically, the implementation process is as follows: The detection signaling processing unit 122 transmits the link state query signaling to the corresponding neighboring E1 node through the first-direction link port and/or the second-direction link port of the E1 driving unit 13; if the E1 node receives, within a preset time range, the link state response signaling returned by the neighboring E1 node, the E1 node determines that the link between the E1 node and the neighboring E1 node is restored to a normal state, and the E1 node sends link failure restoration information to the master node through the first-direction link port of the E1 driving unit 13.

It can be seen that when the E1 transmission link between neighboring nodes is restored to the normal state, the E1 node in this embodiment of the present invention can timely learn the restoration by the signaling interaction, so as to ensure the normal transmission of data between the E1 nodes.

In addition, the local device attached to the E1 node sends service data to the CPU unit 12 through the Ethernet transmitting unit 11, and the CPU unit 12 sends the service data to the neighboring E1 node through the corresponding port of the E1 driving unit 13.

In another preferred embodiment of the present invention, as shown in FIG. 2, the CPU unit 12 also includes:
a low power configuring unit 123, configured to control an integrated circuit associated with the E1 transmission link to go into a low power operation mode when the transmission link between the E1 node and the neighboring E1 node fails.

After the transmission link fails, no data is transmitted between two link ports involved in the transmission link. Therefore, energy consumption can be reduced and energy can be saved after two corresponding nodes control the integrated circuit that corresponds to the failed transmission link to go into the low power state.

Corresponding to the foregoing E1 node, an embodiment of the present invention provides a system for transmitting data in an E1 bidirectional ring network on the basis of the E1 node. The system includes: a master node and at least one slave node, and each of the nodes is connected to a local Ethernet device through an Ethernet branch port.

Each slave node is configured to perform interaction of link state detection signaling with a corresponding neighboring node through a first-direction link port and/or a second-direction link port; and when determining a failure in a transmission link between the E1 node and the neighboring E1 node on the basis of an interaction state of the link state detection signaling between the E1 node and the neighboring E1 node, transmit link failure information to the master node through a link port in the first-direction link port and the second-direction link port of the E1 node, where the link port is not a link port that is associated with the failed transmission link and is currently unavailable.

The master node is configured to perform the interaction of the link state detection signaling with the corresponding E1 neighboring node through the first-direction link port and/or the second-direction link port, and when determining the failure in the transmission link between the master E1 node and the neighboring E1 node on the basis of the interaction state of the link state detection signaling between the master E1 node and the neighboring E1 node or after receiving the link failure information, switch an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data.

The master node and each slave node basically have the same structure. Each slave node may use the structure of the E1 node shown in FIG 1. In addition to having the function of a slave node, the master node is further configured to, after receiving the link failure information, switch an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data. It should be noted that each node in the E1 bidirectional ring network may be configured to be a master node.

To facilitate further understanding of the system for transmitting data in an E1 bidirectional ring network according to this embodiment of the present invention, the system is hereinafter described in detail with reference to the specific implementation of the present invention.

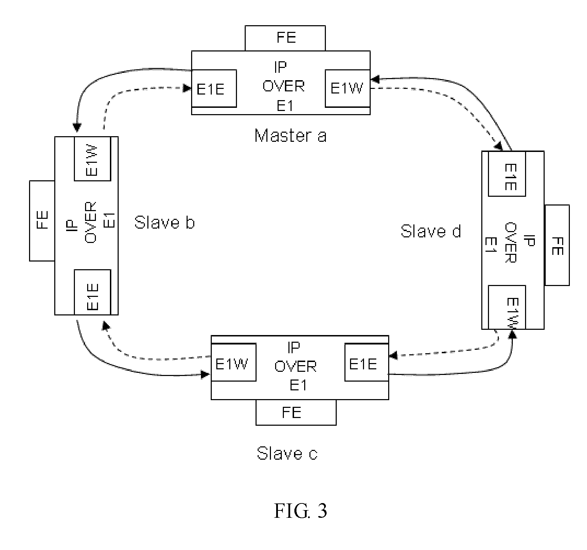

As shown in FIG 3, FIG 3 is a schematic structural diagram of a system for transmitting data in an E1 bidirectional ring network according to an embodiment of the present invention. The system for transmitting data in an E1 bidirectional ring network in FIG 3 includes one master node a (master a) and three slave nodes b, c, and d (slaves b, c, and d), and E1 link ports between master a and slaves b, c, and d are connected to form a bidirectional ring network. In this embodiment of the present invention, slaves b, c, and d each have the same structure and use the structure of the E1 node shown in FIG 1. Each node includes: an Ethernet transmitting unit 11 connected to a local device through an Ethernet branch port (FE), a CPU unit 12, and an E1 driving unit 13 that includes two E1 link ports. The CPU unit includes a data processing unit 121 and a detection signaling processing unit 122; and the Ethernet branch port (FE) is used to send and receive Ethernet data and is connected to the local device by using a network cable. The E1 link ports between master a and slaves b, c, and d are connected with each other to form a bidirectional ring network, and interaction of link state detection signaling (including link state query signaling and link state response signaling) is performed between two neighboring E1 nodes, so as to learn whether the transmission link between the two E1 nodes fails. If a failure occurs, link failure information is transmitted to master a through a link port in the first-direction link port and the second-direction link port of the current E1 node, where the link port is not a link port that is associated with the failed transmission link and is currently unavailable.

It is assumed that when the system for transmitting data in an E1 bidirectional ring network is connected normally, as shown in FIG 3, master a sends data through an a_E1E port and receives data through an a_E1W port, and the data transmission path is: a -> a_E1E -> b_E1W -> b -> b_E1E -> c_E1W -> c -> c_E1E -> d_E1W -> d -> d_E1E -> a_E1W, as shown by the solid line in FIG 3; alternatively, master a sends data through an a_E1W port and receives data through an a_E1E port, and the data transmission path is: a -> a_E1W-> d_E1E-> d -> d_E1W -> c_E1E -> c -> c_E1W -> b_E1E -> b -> b_E1W -> a_E1E, as shown by the dotted-line transmission path in FIG 3.

In this embodiment of the present invention, four E1 transmission links are included: a_E1E <-> b_E1W, b_E1E <-> c_E1W, c_E1E <-> d_E1W, and d_E1E <-> a E1W. When the system for transmitting data in an E1 bidirectional ring network is connected normally, the detection signaling processing unit of each node maintains interaction of signaling, including link state query signaling and link state response signaling, with the detection signaling processing unit of the neighboring node of the each node. For example: node c sends the link state query signaling to the b_E1E port through the c_E1W port, and when the transmission link between node b and node c is in a normal state, node b feeds back the link state response signaling to node c through the b_E1E port; meanwhile, node b sends the link state query signaling to node c through the b_E1E port, and when the transmission link between node b and node c is in a normal state, node c feeds back the link state response signaling to node b through the c_E1W. The transmission link between the neighboring E1 nodes b and c includes two signaling transmission channels, where one of the two signaling transmission channels is used for node b to send or to feed back signaling to node c, and the other channel is used for node c to feed back or to send signaling to node b. When node c can feed back, through the c_E1W port, the link state response signaling in response to the link state query signaling sent by node b, or when node b can feed back, through the b_E1E port, the link state response signaling in response to the link state query signaling sent by node c, the transmission link between node b and node c is in a normal state; otherwise, the transmission link between node b and node c fails.

In addition, when an E1 node receives data information, the E1 node determines, according to destination address information carried in the data, whether the destination address information matches the address information of the E1 node. If the destination address information matches the address information of the E1 node, it indicates that the received data information is the data of the E1 node, and the data is forwarded to a local device attached to the E1 node, to perform corresponding data acknowledgement processing. Acknowledgement data also carries destination address information representing address information of a recipient of the acknowledgement data, and the acknowledgement data is transmitted along a data transmission path until to a destination address. If the destination address information does not match the address information of the E1 node, it indicates that the received data information is not the data of the E1 node, and the data is directly transmitted from the E1 node to a next hop E1 node, so as to complete the transparent transmission of the data.

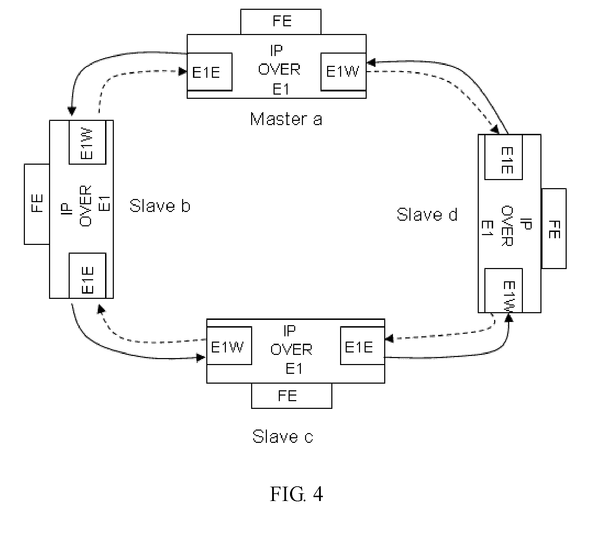

Referring to FIG 4, FIG 4 is a diagram illustrating the principle of self-healing of the system for transmitting data in an E1 bidirectional ring network in FIG 3. It is assumed that the transmission link fails and the failure occurs between node c and node d.

It is assumed that the a_E1E port of the current master a is a sending port and the a_E1W port is a receiving port. When slave c detects, within a preset time range, that the link state response signaling of the d_E1W port in response to the link state query signaling of slave c disappears, slave c determines that the transmission link between slave c and slave d fails, and slave c generates failure information that is sent from the c_E1W port to the master node; the failure information carries information indicating that the transmission link between slave c and slave d fails. When the c_E1E port is a sending port currently, slave c needs to set the c_E1W port to a sending port, and the failure information is reported to master a through the E1W port of slave c. At the same time, slave c receives data information from slave b, and if it is found that the data information is not the data of the slave c, the data information is directly discarded; and if the data information is the data of the slave c, the local device of slave c performs corresponding processing, and the acknowledgement data is transmitted to master a through the c_E1W port.

When master a receives the failure information reported by slave c, the a_E1W port of master a is set to a sending port too, master a sends and receives data through the a_E1E port, and master a also sends and receives data through the a_E1W port. The current system for transmitting data in an E1 bidirectional ring network forms a new E1 bidirectional ring network: a -> a_E1E -> b_E1W -> b -> b_E1E -> c_E1W->c -> c_E1W ->b_E1E-> b -> b_E1W -> a_E1E and a -> a_E1W -> d_E1E -> d -> d_E1E -> a_E1W.

When slave c detects that the response signaling sent from the d_E1W port to the c_E1E port of slave c is restored, that is, the transmission link between slave c and slave d is restored to the normal state, slave c reports link failure restoration information to the master node through the c_E1W port, and meanwhile, slave c goes into a normal operation state, that is, slave c determines whether the received data information is the data of the slave c; if yes, corresponding data processing is performed, and the acknowledgement data after the processing is transmitted to a next node d through the c_E1E port; and if no, slave c transparently transmits the information, which is received from the c_E1W port, to a next node d through the c_E1E port.

When receiving the information that indicates the link is restored to the normal state and is reported by slave c, master a goes into the normal operation state, that is, maintains the a_E1E port in the state of sending data and restores the a_E1W port to the state of receiving data.

Similarly, when slave d detects that the response signaling of the c_E1E port in response to the link state query signaling of slave d disappears, slave d determines that the transmission link between slave c and slave d fails, and link failure information is sent from the d_E1E port of slave d to master a, where the link failure information carries information indicating that the transmission link between slave c and slave d fails, and then slave d reports the information indicating that the transmission link between slave c and slave d fails to master a through the d_E1E port. At the same time, slave d receives data information from master a, and if it is found that the data information is not the data of the slave d, the data information is directly discarded; and if the data information is the data of the slave d, the local device of slave d performs corresponding processing, and the acknowledgement data is transmitted to master a through the d_E1E port.

When master a receives the failure information reported by slave d, the a_E1W port of master a is set to a sending port too, master a sends and receives data through the a_E1E port, and master a also sends and receives data through the a_E1W port. The current system for transmitting data in an E1 bidirectional ring network forms a new E1 bidirectional ring network: a -> a_E1E -> b_E1W -> b -> b_E1E -> c_E1W->c -> c_E1W ->b_E1E-> b -> b_E1W -> a_E1E and a -> a_E1W -> d_E1E -> d -> d_E1E -> a_E1W.

Similarly, when slave d detects that the response signaling of the c_E1E port in response to the link state query signaling of slave d is restored, that is, the transmission link between slave c and slave d is restored to the normal state, slave d reports link failure restoration information to the master node a through the d_E1E port, and meanwhile, slave d goes into the normal operation state, that is, slave d determines whether the received data is the data of the slave d; if yes, corresponding data processing is performed, and the acknowledgement data after the processing is transmitted to master a through the d_E1E port; and if no, slave d transparently transmits the information, which is received from the d_E1W port, to master a through the d_E1E port.

When receiving the information that indicates the link is restored to the normal state and is reported by slave d, the master node goes into the normal operation state, that is, maintains the a_E1E port in the state of sending data and restores the a_E1W port to the state of receiving data.

It can be seen that, the E1 bidirectional ring network in this embodiment of the present invention has the self-diagnosis capability, and the master node can learn the failed transmission link in time, so as to generate a new E1 transmission ring. Therefore, a device for detecting the state of a transmission link does not need to be disposed externally, the self-healing time of the E1 bidirectional ring network is short, and because a node can automatically detect its own failure state, and automatically restore the E1 bidirectional ring network when a failure occurs, the self-healing time of the E1 bidirectional ring network does not change with the increase of the network capacity, so that the survivability of the E1 bidirectional ring network can be improved effectively.

In addition, after the transmission link fails, no data is transmitted between two link ports involved in the transmission link. Therefore, energy consumption can be reduced and energy can be saved after two corresponding nodes control the integrated circuit that corresponds to the failed transmission link to go into the low power state.

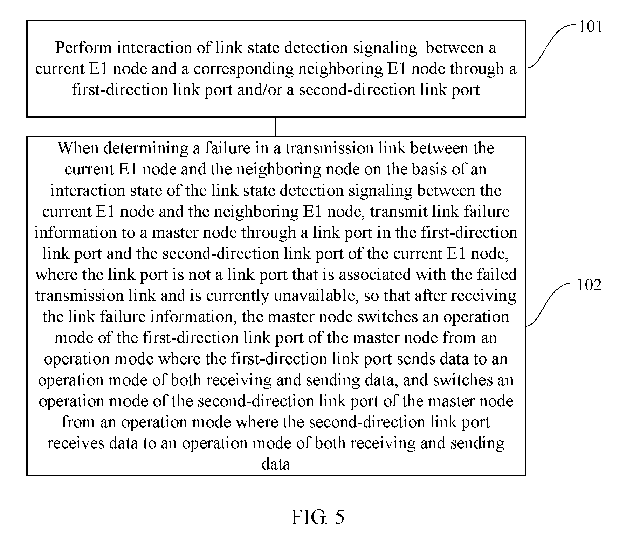

Corresponding to the foregoing system for transmitting data in an E1 bidirectional ring network and the E1 node, an embodiment of the present invention also provides a method for transmitting data in an E1 bidirectional ring network. As shown in FIG 5, FIG 5 is a flowchart of the method, the method includes:

Step 101: Perform interaction of link state detection signaling between a current E1 node and a corresponding neighboring E1 node through a first-direction link port and/or a second-direction link port.

Step 102: When determining a failure in a transmission link between the current E1 node and the neighboring node on the basis of an interaction state of the link state detection signaling between the current E1 node and the neighboring E1 node, transmit link failure information to a master node through a link port in the first-direction link port and the second-direction link port of the current E1 node, where the link port is not a link port that is associated with the failed transmission link and is currently unavailable, so that after receiving the link failure information, the master node switches an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data.

Through the interaction of link state detection signaling between two neighboring E1 nodes according to this embodiment of the present invention, an E1 node is enabled to learn the state of the transmission link between the E1 node and a neighboring E1 node in time, and when the transmission link fails, the exact location at which the failure occurs can be accurately determined. Therefore, a device for detecting the state of a transmission link does not need to be disposed externally, and the survivability of the E1 bidirectional ring network can be improved effectively.

It should be noted that two neighboring E1 nodes perform signaling interaction to learn whether a link port corresponding to an E1 transmission link between the two neighboring E1 nodes fails in the following specific implementation way:

The E1 node receives the link state detection information sent by the neighboring E1 node, where the link state detection information specifically includes link state query signaling and link state response signaling; when the E1 transmission link between the E1 node and the neighboring E1 node fails, the neighboring E1 node cannot receive, within a preset time range, the link state response signaling fed back by the E1 node, or the E1 node cannot receive, within a preset time range, the link state response signaling fed back by the neighboring E1 node. The E1 node transmits link failure information to the master node through a link port in the first-direction link port and the second-direction link port, where the link port is not a link port that is associated with the failed transmission link and is currently unavailable. When the failure of the E1 transmission link between the E1 node and the neighboring E1 node disappears, the neighboring E1 node receives, within the preset time range, the link state response signaling fed back by the E1 node, or the E1 node receives, within the preset time range, the link state response signaling fed back by the neighboring E1 node.

It should be noted that in an implementation way, if data is transmitted counterclockwise in an E1 bidirectional ring network, and then the first-direction link port may specifically be a west E1 port (E1W) and the second-direction link port may specifically be an east E1 port (E1E); and in another implementation way, if data is transmitted clockwise in an E1 bidirectional ring network, and then the first-direction link port may specifically be an east E1 port (E1E) and the second-direction link port may specifically be a west E1 port (E1W).

It can be seen that, an E1 bidirectional ring network applying the E1 node of this embodiment of the present invention has the self-diagnosis capability, and the master node can learn the failed transmission link in time, so that when a transmission link in a current E1 transmission ring fails, a new E1 transmission ring is generated automatically.

In addition, when an E1 node receives data information, the E1 node determines, according to destination address information carried in the data, whether the destination address information matches the address information of the E1 node. If the destination address information matches the address information of the E1 node, it indicates that the received data information is the data of the E1 node, and the data is forwarded to a local device attached to the E1 node, to perform corresponding data acknowledgement processing. Acknowledgement data also carries destination address information representing address information of a recipient of the acknowledgement data, and the acknowledgement data is transmitted along a data transmission path until to a destination address. If the destination address information does not match the address information of the E1 node, it indicates that the received data information is not the data of the E1 node, and the data is directly transmitted from the E1 node to a next hop E1 node, so as to complete the transparent transmission of the data.

When persons skilled in the art implement the technical solution of this embodiment of the present invention, the master node and each slave node basically have the same structure; each slave node may use the structure of the E1 node shown in FIG 1, where the E1 node includes a CPU with an HDLC interface, an E1 driving chip including two link ports, and an Ethernet transmission driving chip. In addition to having the function of a slave node, the master node is further configured to, after receiving the link failure information, switch an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data. According to actual requirements, each node in the E1 bidirectional ring network may be configured to be a master node. By combining such node devices into a system for transmitting data in an E1 bidirectional ring network to perform bidirectional transmission of data, each node can detect the state of the link during the transmission of data, and perform failure feedback and self-healing when a failure occurs. For the detailed operation principle of each node and the method for processing data between the nodes, reference can be made to the foregoing description of the principle, and details are not repeatedly described herein.

In another preferred technical solution of this embodiment of the present invention, as shown in FIG 6, the method also includes:

Step 103: When determining, on the basis of the interaction state of link state detection signaling between the current E1 node and the neighboring E1 node, that the E1 transmission link between the current E1 node and the neighboring E1 node is restored and available, send link failure restoration information to the master node through the first-direction link port of the current E1 node, so that after receiving the link failure restoration information, the master node switches an operation mode of the first-direction link port of the master node from an operation mode where the first-direction link port receive and send data to an operation mode where the first-direction link port sends data, and switches an operation mode of the second-direction link port of the master node from an operation mode where the second-direction link port receive and send data to an operation mode where the second-direction link port receives data.

The current E1 node transmits the link state query signaling to a corresponding neighboring E1 node through the first-direction link port and/or the second-direction link port, and if within a preset time range, the current E1 node receives the link state response signaling returned by the neighboring E1 node, the current E1 node determines that the link between the current E1 node and the neighboring E1 node is restored to a normal state, and the current E1 node sends the failure restoration information to the master node through the first-direction link port; and after receiving the link failure restoration information, the master node switches the operation mode of its own ports: switches an operation mode of the first-direction link port of the master node from an operation mode where the first-direction link port receive and send data to an operation mode where the first-direction link port sends data, and switches an operation mode of the second-direction link port of the master node from an operation mode where the second-direction link port receive and send data to an operation mode where the second-direction link port receives data. Each slave E1 node is also restored to the operation mode where the first-direction link port sends data and the second-direction link port receives data. That is, when an E1 node receives data information, the E1 node determines, according to destination address information carried in the data, whether the destination address information matches the address information of the E1 node. If the destination address information matches the address information of the E1 node, it indicates that the received data information is the data of the E1 node, and the data is forwarded to the local device attached to the E1 node, to perform corresponding data acknowledgement processing. Acknowledgement data also carries destination address information representing address information of a recipient of the acknowledgement data, and the acknowledgement data is transmitted along a data transmission path until to a destination address. If the destination address information does not match the address information of the E1 node, it indicates that the received data information is not the data of the E1 node, and the data is directly transmitted from the E1 node to a next hop E1 node, so as to complete the transparent transmission of the data.

It can be seen that, according to this embodiment of the present invention, when the E1 transmission link between neighboring E1 nodes is restored to the normal state, the E1 node in this embodiment of the present invention can timely learn the restoration by the signaling interaction, so as to ensure the normal transmission of data between the E1 nodes.

Persons of ordinary skill in the art may understand that all or part of steps in the above method embodiments may be implemented by a program instructing relevant hardware. The program may be stored in a computer readable storage medium, and when the program is executed, the steps of the above method embodiments are included; and the foregoing storage medium may be any medium capable of storing program codes, such as a ROM, a RAM, a magnetic disk, and a CD-ROM.

The communication apparatuses in the foregoing embodiments of the present invention may be implemented by software, hardware, or a combination of software and hardware, and the embodiments of the present invention impose no specific limitation on the implementation way.

Because the method embodiments basically correspond to the apparatus and system embodiments, the description of the method embodiments is simple, and for the relevant parts, reference can be made to the description of the apparatus and system embodiments. The apparatus embodiments described above are exemplary only, and the modules described in the embodiments as discrete components may or may not be physically separated, and the components shown as modules may or may not be physical modules and may be located at a place or may be distributed on many network modules. Part or all of the modules may be selected according to the actual requirements to implement the objective of the solutions of the embodiments. Persons of ordinary skill in the art may understand and implement the embodiments without creative efforts.

The above description of the disclosed embodiments enables those skilled in the art to make or use the present invention. Various modifications to the embodiments will be readily apparent to those skilled in the art, and the general principles defined in the application may be implemented in other embodiments without departing from the spirit and scope of the embodiments of the present invention. Therefore, the embodiments of the present invention are not intended to be limited to the embodiments shown in the application but are to be accorded the widest scope consistent with the principles and novel features disclosed in the application.

## Claims

1. An E1 node, comprising: an Ethernet transmitting unit connected to a local Ethernet device through an Ethernet branch port, a CPU unit, and an E1 driving unit comprising a first-direction link port and a second-direction link port; wherein the Ethernet transmitting unit and the E1 driving unit perform data interaction through the CPU unit; and
the CPU unit is configured to perform interaction of link state detection signaling between the E1 node and a corresponding neighboring E1 node through the first-direction link port and/or the second-direction link port of the E1 driving unit; and when determining a failure in a transmission link between the E1 node and the corresponding neighboring E1 node on the basis of an interaction state of the link state detection signaling between the E1 node and the corresponding neighboring E1 node, transmit link failure information to a master node through a link port in the first-direction link port and the second-direction link port of the E1 node, wherein the link port is not a link port that is associated with the failed transmission link and is currently unavailable, so that after receiving the link failure information, the master node switches an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data.

2. The E1 node according to claim 1, wherein the CPU unit comprises a data processing unit and a detection signaling processing unit, wherein:
the data processing unit is configured to parse a data message that is received from the second-direction E1 link port and delivered by a previous hop neighboring E1 node; if destination address information carried in the data message matches address information of the E1 node, forward the data message to the Ethernet transmitting unit, so that the Ethernet transmitting unit then transmits the data message to the local Ethernet device; or, transmit the data message from the first-direction E1 link port to a next hop neighboring E1 node if destination address information carried in the data message does not match address information of the E1 node; and
the detection signaling processing unit is configured to transmit link state query signaling to the corresponding neighboring E1 node through the first-direction link port and/or the second-direction link port of the E1 driving unit and receive link state response signaling transmitted by the corresponding neighboring E1 node, and receive link state query signaling transmitted by the corresponding neighboring E1 node and transmit link state response signaling to the corresponding neighboring E1 node through the first-direction link port and/or the second-direction link port of the E1 driving unit; and if no link state query signaling or link state response signaling transmitted by the neighboring E1 node is received within a preset time range, determine that the transmission link between the E1 node and the corresponding neighboring E1 node fails, and generate the link failure information and transmit the link failure information to the master node through the link port in the first-direction link port and the second-direction link port of the E1 node, wherein the link port is not a link port that is associated with the failed transmission link and is currently unavailable, and the link state detection signaling comprises the link state query signaling and the link state response signaling.

3. The E1 node according to claim 2, wherein the detection signaling processing unit is further configured to: send link failure restoration information to the master node through the first-direction link port when detecting, on the basis of the interaction of the link state query signaling and/or the link state response signaling between the E1 node and the corresponding neighboring E1 node through the first-direction link port and/or the second-direction link port of the E1 driving unit, that the transmission link between the E1 node and the corresponding neighboring E1 node is restored to be available.

4. The E1 node according to any one of claims 1 to 3, wherein the CPU unit further comprises:
a low power configuring unit, configured to, when the transmission link between the E1 node and the corresponding neighboring E1 node fails, control an integrated circuit associated with the transmission link to go into a low power operation mode.

5. A system for transmitting data in an E1 bidirectional ring network, comprising a master node and at least one slave node, wherein each node is connected to a local Ethernet device through an Ethernet branch port; each slave node is configured to perform interaction of link state detection signaling with a corresponding neighboring node through a first-direction link port and/or a second-direction link port, and when determining a failure in a transmission link between the slave node and the corresponding neighboring E1 node on the basis of an interaction state of the link state detection signaling between the slave node and the neighboring E1 node, transmit link failure information to the master node through a link port in the first-direction link port and the second-direction link port of the slave node, wherein the link port is not a link port that is associated with the failed transmission link and is currently unavailable; and
the master node is configured to perform interaction of link state detection signaling with a corresponding neighboring node through a first-direction link port and/or a second-direction link port, and when determining a failure in a transmission link between the master node and the corresponding neighboring E1 node on the basis of an interaction state of the link state detection signaling between the master node and the corresponding neighboring E1 node or after receiving the link failure information, switch an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data.

6. The system for transmitting data in an E1 bidirectional ring network according to claim 5, wherein each slave node is further configured to, when determining, on the basis of the interaction state of the link state detection signaling between the slave node and the corresponding neighboring E1 node, that the transmission link between the slave node and the corresponding neighboring E1 node is restored to be available, send link failure restoration information to the master node through the first-direction link port of the slave node, and transmit data to a next hop neighboring node through the first-direction link port, and receive, through the second-direction link port, data transmitted by a previous hop neighboring E1 node.

7. The system for transmitting data in an E1 bidirectional ring network according to claim 6, wherein the master node is further configured to, when determining, on the basis of the interaction state of the link state detection signaling between the master node and the neighboring E1 node, that the transmission link between the master node and the neighboring E1 node is restored to be available or after receiving the link failure restoration information, switch an operation mode of the first-direction link port of the master node from an operation mode where the first-direction link port receive and send data to an operation mode where the first-direction link port sends data, and switches an operation mode of the second -direction link port of the master node from an operation mode where the second-direction link port receive and send data to an operation mode where the second-direction link port receives data.

8. The system for transmitting data in an E1 bidirectional ring network according to claim 5, wherein each E1 node is further configured to, when the transmission link between the E1 node and the neighboring E1 node fails, control an integrated circuit associated with the failed transmission link to go into a low power operation mode.

9. A method for transmitting data in an E1 bidirectional ring network, comprising:
performing interaction of link state detection signaling between a current E1 node and a corresponding neighboring E1 node through a first-direction link port and/or a second-direction link port; and
when determining a failure in a transmission link between the current E1 node and the neighboring E1 node on the basis of an interaction state of the link state detection signaling between the current E1 node and the neighboring E1 node, transmitting link failure information to a master node through a link port in the first-direction link port and the second-direction link port of the current E1 node, wherein the link port is not a link port that is associated with the failed transmission link and is currently unavailable, so that after receiving the link failure information, the master node switches an operation mode of the first-direction link port of the master node from an operation mode where the first-direction link port sends data to an operation mode of both receiving and sending data, and switches an operation mode of the second-direction link port of the master node from an operation mode where the second-direction link port receives data to an operation mode of both receiving and sending data.

10. The method for transmitting data in an E1 bidirectional ring network according to claim 9, further comprising:
when determining, on the basis of the interaction state of the link state detection signaling between the current E1 node and the neighboring E1 node, that the transmission link between the current E1 node and the neighboring E1 node is restored to be available, sending link failure restoration information to the master node through the first-direction link port of the current E1 node, so that after receiving the link failure restoration information, the master node switches an operation mode of the first-direction link port of the master node from an operation mode where the first-direction link port receive and send data to an operation mode where the first-direction link port sends data, and switches an operation mode of the second-direction link port of the master node from an operation mode where the second-direction link port receive and send data to an operation mode where the second-direction link port receives data.

11. The method for transmitting data in an E1 bidirectional ring network according to claim 9, wherein the step of when determining the failure in the transmission link between the current E1 node and the neighboring E1 node on the basis of the interaction state of the link state detection signaling between the current \E1 node and the neighboring E1 node, transmitting the link failure information to the master node through the link port other than a link port that is associated with the failed transmission link and is currently unavailable in the first-direction link port and the second-direction link port of the current E1 node comprises:
transmitting link state query signaling to the corresponding neighboring E1 node through the first-direction link port and/or the second-direction link port and receiving link state response signaling transmitted by the corresponding neighboring E1 node, and receiving link state query signaling transmitted by the corresponding neighboring E1 node and transmitting link state response signaling to the corresponding neighboring E1 node through the first-direction link port and/or the second-direction link port; and
when no link state query signaling or link state response signaling transmitted by the corresponding neighboring E1 node is received within a preset time range, determining that the transmission link between the current E1 node and the corresponding neighboring E1 node fails, and generating link failure information and transmitting the link failure information to the master node through the link port in the first-direction link port and the second-direction link port of the current E1 node, wherein the link port is not a link port that is associated with the failed transmission link and is currently unavailable, and the link state detection signaling comprises the link state query signaling and the link state response signaling.

12. The method for transmitting data in an E1 bidirectional ring network according to any one of claims 9 to 11, wherein:
if data is transmitted counterclockwise in the E1 bidirectional ring network, the first-direction link port is a west E1 port and the second-direction link port is an east E1 port; and
if data is transmitted clockwise in the E1 bidirectional ring network, the first-direction link port is an east E1 port and the second-direction link port is a west E1 port.
